Europäisches Patentamt

European Patent Office

Office européen des brevets

(19)

(11) EP 1 408 694 A1

(12) **EUROPEAN PATENT APPLICATION**

(43) Date of publication:
**14.04.2004 Bulletin 2004/16**

(51) Int Cl.⁷: **H04N 7/26**

(21) Application number: **02022303.8**

(22) Date of filing: **07.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **MATSUSHITA ELECTRIC INDUSTRIAL
CO., LTD.
Kadoma-shi, Osaka 571-8501 (JP)**

(72) Inventors:
• **Schlockermann, Martin
63322 Roedermark (DE)**

• **Kadono, Shinya, Dr.
Nishinomiya, 663-8113 (JP)**
• **Kondo, Satoshi
Yawata Kyoto 614-8361 (JP)**

(74) Representative: **Grünecker, Kinkeldey,
Stockmair & Schwanhäusser Anwaltssozietät
Maximilianstrasse 58
80538 München (DE)**

(54) **Direct mode motion vector calculation**

(57) The present invention aims to provide a motion vector calculation enabling an increased coding efficiency. This is accomplished in a direct mode motion vector calculation by always referencing fields having the same parity as the current field. These fields provide a better prediction of the current block and result in a smaller prediction error to be encoded and transmitted.

*Fig. 11*

## Description

The present invention generally relates to the encoding and decoding of image data and in particular to a method and a unit for calculating a direct mode motion vector.

Motion pictures are being adopted in an increasingly number of applications which range from video telephoning and video conferencing to DVD and digital television. During transmission of motion pictures, a substantial amount of data has to be sent through conventional transmission channels of a limited available frequency bandwidth. In order to transmit a digital data through the limited channel bandwidth, it is inevitable to compress or reduce the volume of the transmission data.

In order to enable inter-operability between systems designed by different manufactures for any given application, video coding standards have been developed for compressing the amount of video data. Video coding standards are denoted with H.26x for ITU-T standards and with MPEG-x for ISO/IEC standards.

The underlying coding approach of most of these standards consists of the following main stages:

(a) Dividing each video field/frame into blocks of pixels such that a processing of the video field/frame can be conducted at a block level.

(b) Reducing spatial redundancies within a video field/frame by subjecting the video data of a block of pixels to transformation, quantization and entropy encoding.

(c) Exploiting temporal dependencies between blocks of subsequent fields/frames in order to only transmit changes between subsequent fields/frames. This is accomplished by employing motion estimation and compensation techniques. For any given block a search is performed in previously encoded and transmitted fields/frames in order to determine a motion vector which will be used by the encoder and decoder to predict the image data of a block.

Among various video compression techniques, a so-called hybrid coding technique is known to be most effective. The hybrid coding technique combines temporal and spatial compression techniques together with a statistical coding. Most hybrid coding techniques employ a motion compensated DPCM (Differential Pulse Code Modulation), a two-dimensional DCT (Discrete Cosine Transform), a quantization of DCT coefficients and VLC (Variable Length Coding). The motion compensated DPCM is a process of determining the movement of an image object between a current field/frame and a previous field/frame, and predicting the current field /frame according to the determined motion to produce a differential signal representing the difference between the current field/frame and its prediction.

Specifically, in the motion compensated DPCM current field/frame data is predicted from the corresponding previous field/frame data based on an estimation of the motion between the current and the previous fields/frames. Such estimated motion may be described in terms two-dimensional motion vectors representing the displacement of pixels between the previous and the current fields/frames. Generally, motion is estimated on a block basis. The motion estimation is accomplished by comparing a block in a current field/frame with blocks in a previous field/frame until a best match is determined. From the best match, an inter-frame displacement vector, indicating how much the block has moved between fields/frames, is estimated for the whole block.

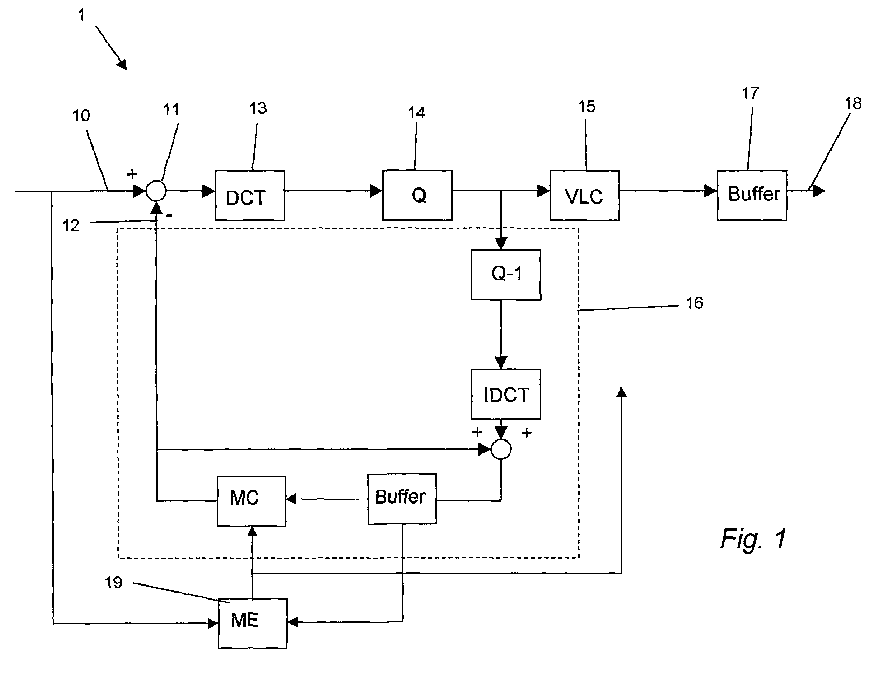

An example of a video encoder configuration is illustrated in Fig. 1. The shown video encoder, generally denoted with reference numeral 1, comprises a transform unit 13 to transform the spatial image data to the frequency domain, a quantization unit 14 to quantize the transform coefficients provided by transform unit 13, a variable length coder 15 for entropy coding the quantized transformed coefficients, and a video buffer 17 for adapting the compressed video data having a variable bit rate to a transmission channel which may have a fixed bit rate.

The encoder shown in Fig. 1 employs a DPCM approach by only transmitting differences between subsequent fields/frames. These differences are obtained in subtractor 11 which receives the video data 10 to be encoded and substrates the previous image 12 therefrom. The previous image 12 is obtained by decoding the previously encoded image ("the currently decoded image"). This is accomplished by a decoder 16 which is incorporated into video encoder 1. The decoder 16 performs the encoding steps in a reverse manner, i.e. a decoder 16 comprises an inverse quantizer (Q-1), an inverse transform unit (IDCT), and an adder for adding the decoded changes to the previously decoded image in order to produce the previous image as it will be obtained on the decoding side.

In motion compensated DPCM, current field or frame data is predicted from the corresponding previous field/frame data based on an estimation of motion between the current and the previous fields/frames. Such estimated motion may be described in terms two-dimensional motion vectors representing the displacement of pixels between the previous and current frames. Usually, motion estimation is performed on a block-by-block basis wherein a block in a current field/frame is compared with blocks in its previous fields/frames until a best match is determined. Based on the comparation result, an inter-frame displacement vector for a whole block can be estimated for the current frame. For this purpose, a motion estimation unit 19 is incorporated into the encoder together with a corresponding motion compensation unit MC included into the decoding path.

As newer encoding standards also allow to encode image areas of any arbitrary shape, motion may also determined for an image object not having a regular block shape.

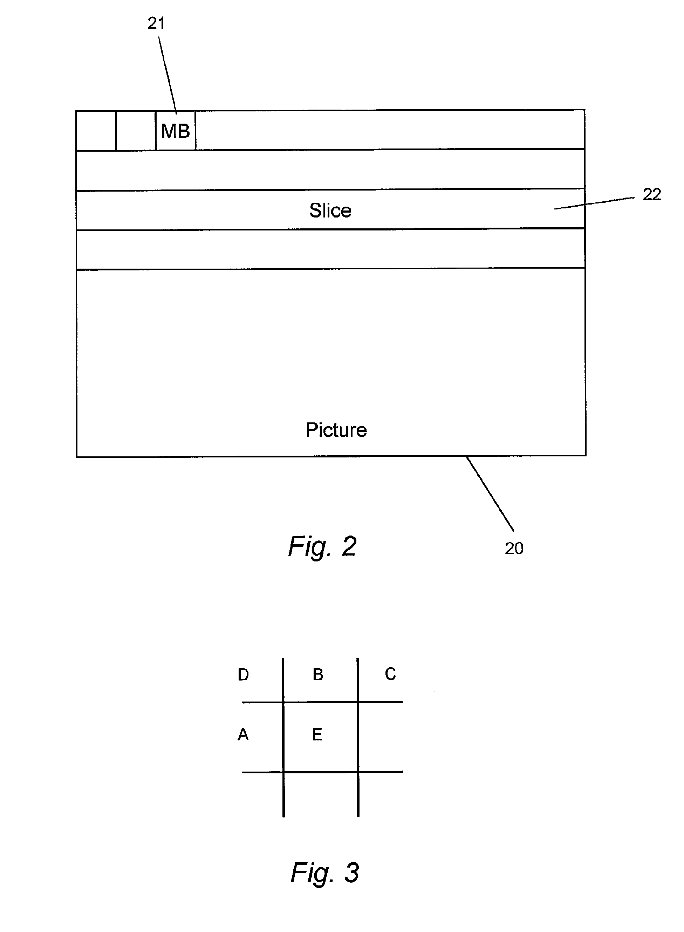

The video encoder of Fig. 1 is operated as follows. A given video image of a video signal 10 is divided into a number of small blocks, usually denoted as "macro blocks". For example, the video image 20 shown in Fig. 2 is divided into a plurality of macro blocks 21. Each of the macro blocks usually has a size of 16x16 pixels.

In addition, the pictures are divided into a number of "slices" 22 which are used for re-synchronization purposes in case of data losses. Each slice consists of a plurality of macro-blocks, wherein the arrangement of macro blocks forming one slice is not restricted to the example shown in Fig. 2.

When encoding the video data of an image by only reducing spatial redundancies within the image, the resulting frame is referred to as an I-picture. I-pictures are typically encoded by directly applying the transform to the macro blocks of a frame. Encoded I-pictures are large in size as no temporal information is exploited to reduce the amount of data.

In order to take advantage of temporal redundancies that exists between successive images, a prediction and coding between subsequent fields or frames is performed based on motion estimation and compensation. When a selected reference in motion estimation is a previously encoded field or frame, the field or frame to be encoded is referred to as a P-picture.

In case a previously encoded field/frame and a future encoded field/frame are chosen as references, the field/frame to be encoded is referred to as a B-picture.

Based on the result of the motion estimation operation, the motion compensation operation provides a prediction in accordance with the determined motion vector. The information contained in a prediction error block resulting from the predicted block is then transformed into transform coefficients in transform unit 13. Generally, a two-dimensional DCT is employed. The resulting transform coefficients are quantized and finally entropy encoded (VLC) in entropy encoding unit 15.

The transmitted stream of compressed video data 18 is received by a decoder which reproduces the sequence of encoded images based on the received data. The decoder configuration corresponds to that of decoder 16 included within the encoder of Fig. 1. A detailed description of a decoder configuration is omitted therefor.

Newer video encoding standards offer the option of having multiple reference fields/frames for inter-picture encoding resulting in a more efficient coding of images. For this purpose, a motion estimation unit and a motion compensation unit employ a multi-frame buffer for providing several reference pictures. The motion vector is accompanied by additional information indicating the respective reference image.

The calculation of motion vectors may be either performed based on a best match approach as described above or calculated based on previously obtained motion vectors. Motion estimation based on existing motion vectors without conducting a time consuming search for a best match block in other references is called "direct mode". In direct mode, only an indication that the current motion vector has to be computed from existing motion vectors is transmitted to the decoder side instead of transmitting the motion vector itself which has been computed on the encoder side.

The direct mode motion vector calculation takes the previously obtained motion vectors into account and computes motion for a particular image block based on existing motion vectors which have similar properties, i.e. having close positions in spatial or temporal respect. Currently, there exist two separate approaches for a motion vector calculation in direct mode. The motion vector may be either determined on a spatial basis by a spatial motion vector calculation technique, or, alternatively, by a temporal motion vector calculation technique on the basis of temporal similarities.

The spatial motion vector calculation technique uses motion vectors of blocks in the neighborhood of the currently encoded block for calculating a direct mode motion vector. An example for a direct mode motion vector calculation is illustrated in connection with Fig. 3. Fig. 3 depicts a current block E being surrounded by blocks A, B, C, and D. For blocks A, B, C, and D are motion vectors already obtained, either by computation based on existing motion vectors or by conducting a best match search.

The motion vector to be currently calculated for block E is formed based on the motion vectors of blocks A, B, C and D. This process is referred to as "median prediction". The following rules specify the predicted motion vector value resulting from the median prediction process for block E:

- If block C is outside the current picture or slice or is not available due to the decoding order within a macro block, its motion vector and reference picture index shall be considered equal to the motion vector and reference picture index for block D.

- If blocks B, C and D are all outside the current picture or slice, their motion vector values and reference picture indices shall be considered as equal to the motion vector value and reference picture index for block A.

- If any predictor not specified by the first or second rules above is coded as intra or is outside the current picture or slice, its motion vector value shall be considered equal to zero and it shall be considered to have a different reference picture block E.

- If only one of the three blocks A, B, and C has the same reference picture as block E, then the predicted motion vector for block E shall be equal to the motion vector of the A, B or C block with the same reference picture as block E; otherwise, each component of the predicted motion vector value for block E shall be the median of the corresponding motion vector component values for blocks A, B, and C.

Alternatively, a direct mode motion vector may be obtained based on temporal motion vector calculation. For a temporal motion vector calculation in direct mode, the motion vector from the macro block of the future reference picture is used. Based on the motion vector of the future reference, preferably two motion vectors are calculated for the current macro block, namely a forward and a backward motion vector. These motion vectors, for instance required for B-pictures, reference the future and the previous reference, i.e. the forward motion vector references the previous reference and the backward motion vector the future reference. These motion vectors are computed as a scaled version of the obtained previous forward motion vector of the co-located macro block. The forward and backward motion vectors for direct mode macro blocks calculated differently depending on the actually employed picture structure (field or frame).

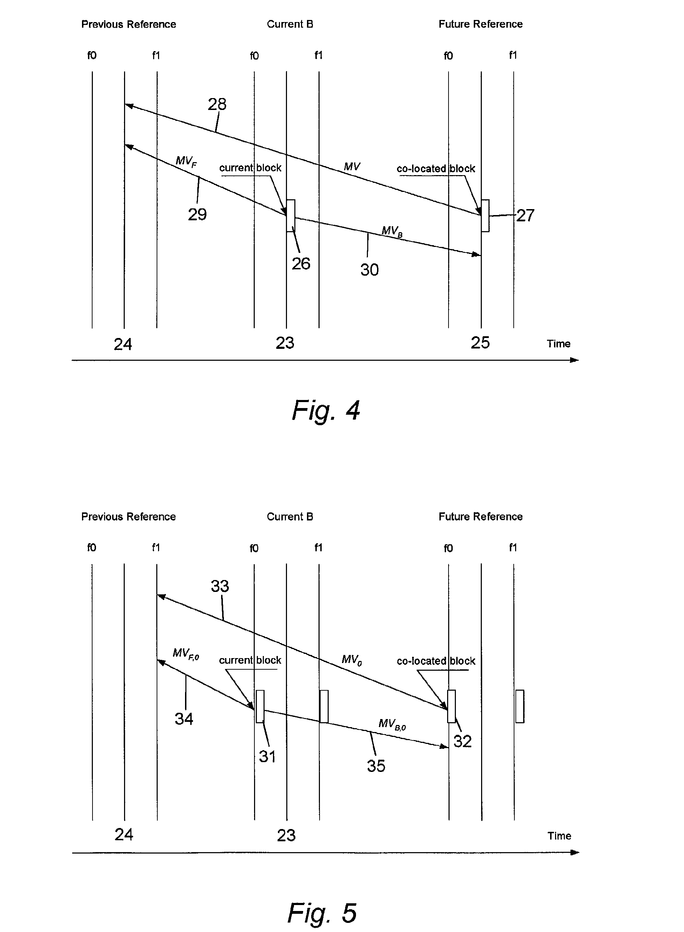

With a possible adaptive switching of field/frame coding at a picture or macro block level in newer video coding standards, the current macro block or its co-located macro block can be coded in either field or frame mode. Thus, there are four possible combinations of frame or field coding for a pair of a macro blocks in the current B-picture and its co-located macro block in the future reference picture. These four possible cases will be explained below by referring to Figures 4 to 7.

Referring to Fig. 4, an image configuration consisting of the current B-picture 23, the previous reference 24 and the future reference 25 is shown. The position of the current block 26 in the current picture 23 is used to obtain the motion vector of the co-located block 27 at the same position in the future reference 25. The motion vector 28 of the co-located block 27 is used for calculating the motion vector of the current block 26.

As can be seen from Fig. 4, all of the pictures 23 to 25 are in frame mode. The obtained motion vector 28 of the co-located block 27 itself references the previous reference 24. This motion vector 28 is split up and scaled in order to obtain the forward motion vector 29 and the back motion vector 30 for the current block 26.

Referring to Fig. 5, a picture configuration is illustrated where both, the reference picture and the current picture, are in field mode. Each of the pictures of Fig. 5 consists of two fields of a different parity, namely fields of parity f0 and fields of a parity f1.

The motion vectors for the current block 31 are calculated based on the motion vector of the co-located block 32 in the future reference field of the same parity f0. For the first field f0 of both fields of the future reference, forward motion vector 33 of the co-located block 32 will always point to one of the previously encoded fields, for instance field f1 of the previous reference 24, as shown in Fig. 5.

In the same manner as described with reference to Fig. 4, the motion vector 33 of the co-located block 32 will be transformed into a forward motion vector 34 and a backward motion vector 35 for the current block 31. Again, the forward motion vector 34 and the backward motion vector 35 references the same fields as referenced by the motion vector 33 of the co-located block 32.

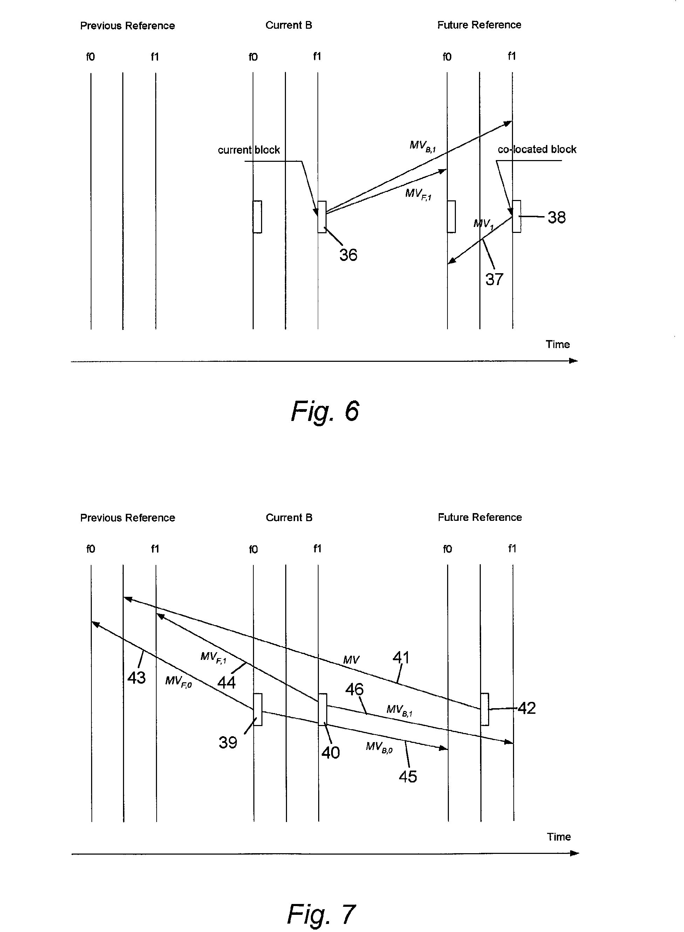

In contrast to Fig. 5 which illustrates a frame configuration with the current block in field of parity f0, Fig. 6 illustrates a situation in which the current block being in the second field of parity f1 of the current B-picture. It is to be noted, that motion vector 37 of the co-located block 38 refers to the first field f0 of the same reference. Consequently, the forward and backward motion vectors of the current block 36 reference both of the fields of the future reference, respectively.

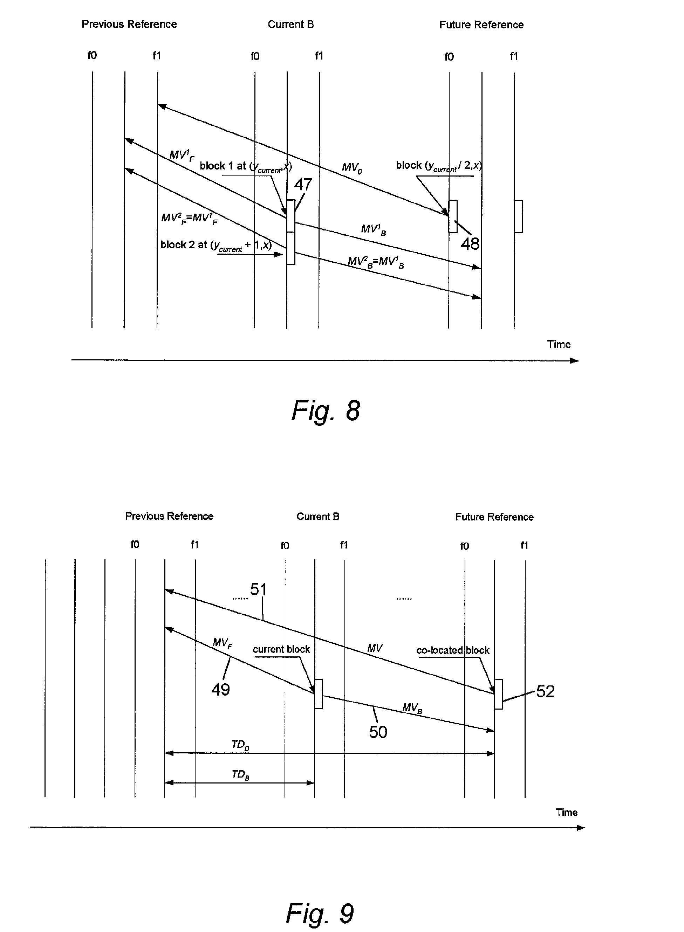

As field/frame coding may be switched at a picture level, the following two picture configurations, which are shown in Figures 7 and 8, relate to picture configurations where the current picture and the reference picture are in different modes, i.e. either in field mode or frame mode.

Referring to Fig. 7, the current B-picture is in field mode wherein the reference is in frame mode. For both blocks of the current picture 39 and 40, which have the same position, but are located in a field of a different parity, the motion vector 41 of the co-located block 42 at the same frame position is employed. The calculated forward and backward motion vectors 43 to 46 respectively reference the fields having a parity corresponding to that of the individual field f0 or f1.

Fig. 8 illustrates a case when the current block 47 is in frame mode while is co-located block 48 in the future picture is in field mode. The motion vectors are calculated such that they reference a progressive representation of the respective references pictures although the motion vector has been obtained form on of the fields of the future reference only.

The scaling of the obtained motion vector for calculating the forward and backward motion vectors of the current block is described by referring to Fig. 9. In hybrid codecs, for instance those which encode and decode image data in accordance with the H.26L standard, the calculation of motion vectors is divided into two steps. First, the determination of the reference pictures and fields is performed, in particular by selecting an appropriate reference from multi-picture references stored for that purpose. Second, the obtained motion vector is scaled. Motion vector scaling is explained in Fig. 9 for both, the current block and its co-located block in the future reference picture, being in frame mode. The previous reference for each block within the current block is the same as a previous reference of the co-located block in the future reference picture.

The forward and backward motion vectors 49 and 50 are calculated as follows:

$$Z = TD_B / TD_D \qquad (1)$$

$$MV_F = Z \times MV \qquad (2)$$

$$W = 1 - Z \qquad (3)$$

$$MV_B = W \times MV \qquad (4)$$

In the above equations, $TD_B$ represents the temporal distance between the current frame and the previous reference frame, and $TD_D$ represents the temporal distance between the future reference frame and the previous reference frame. $MV_F$ being the forward motion vector 49 of the current block and $MV_B$ being the backward motion vector 50 of the current block. MV represents the motion vector 51 of the co-located block 52.

The motion vector calculation in direct mode still has a number of problems. One problem is that the temporal motion vector calculation technique is well suited for progressive video sequences but less qualified for interlaced video sequences.

Accordingly, it is an object of the present invention to provide a method for calculating a motion vector and a motion vector calculation unit which enable a more efficient image encoding and decoding.

This is achieved by the features of claim 1 for a method for calculating a motion vector, and by the features of claim 12 for a unit for calculating a motion vector.

According to a first aspect of the present invention, a method for calculating a motion vector is provided which calculates a motion vector for an image area of a current field of an interlaced field sequence. In a first step, the method obtains a previously calculated motion vector. The previous motion vector is obtained from an image area of another field of said interlaced video sequence. The image area of the other field being essentially located at a corresponding position. The motion vector for the current image area is calculated based on the obtained motion vector and on the temporal differences between the fields referenced by the new motion vector and the fields referenced by said obtained motion vector. The calculation is performed such that the motion vector of the current image area always references a field having the same party as the current field.

According to a second aspect, a unit for calculating a motion vector is provided which calculates a motion vector for an image area of a current field of an interlaced video sequence. The unit comprises a motion vector selector for selecting a previously calculated motion vector for an image area in another field of said interlaced video sequence. The image area of the selected motion vector being essentially located at a corresponding position in the other field. The unit further comprises a motion vector calculator for calculating a motion vector for the current image area. The calculation is based on the selected motion vector and on the temporal differences between the fields referenced by the new motion vector and the fields referenced by said obtained motion vector. The calculation is performed such that the calculated motion vector always references a field having the same parity as the current field.

It is a particular advantage of the present invention that the motion vector calculation in direct mode always calculates a new motion vector which references a field having the same parity as the current field. Thus, the image data of the referenced field will always have the same raster position as the current field. By always referencing a field which has a corresponding parity, the temporal redundancies can be better exploited. In particular, when image objects move horizontally or when all of the image data of the image move horizontally, image data from a field which has the same parity will provide a much better prediction. Thus, the coding efficiency can be improved and a smaller amount of compressed data can be achieved.

According to a preferred embodiment, a forward motion vector and a backward motion vector are calculated for the current image area based on the obtained previous motion vector. Accordingly, two motion vectors, a forward and backward motion vector, are calculated which reference fields having the same parity.

According to another preferred embodiment, the forward motion vector being calculated based on the field referenced by the obtained previous motion vector. The backward motion vector is calculated based on the field from which the previous motion vector has been obtained.

According to another preferred embodiment, the forward and backward motion vectors always reference a previous reference and a future reference, respectively. Thus, a forward and backward motion vector will always reference the fields of different references which surround the current field in temporal respect.

According to another preferred embodiment, each field of said interlaced video sequence being divided into a plurality of blocks. The motion vector being calculated for each block of said plurality of blocks individually. Alternatively, a motion vector may be calculated for each of a plurality of arbitrarily shaped image areas.

According to another preferred embodiment, the previous motion vector is obtained from the future reference of the current field. In particular, the current field may be a B-picture type within the interlaced video sequence.

According to another preferred embodiment, the motion vector of the current image area is calculated based on the ratio of the temporal distance between the current field and the field referenced by the new motion vector and the temporal distance between the field of the corresponding image area and the field referenced by the obtained motion vector. As the obtained motion vector is scaled into at least a single new motion vector on the basis of the actually used fields, the new motion vector is calculated with high precision and, consequently, a better prediction of the current image area is achieved.

According to another aspect of the present invention, a method for decoding an encoded interlaced video sequence is provided. An encoded prediction error of a current image area is received together with a direct mode indication. A direct mode motion vector is calculated based on the motion vector of an image area at a corresponding position in another field of said interlaced video sequence and based on the temporal differences between the fields referenced by the new motion vector and the fields referenced by said obtained motion vector. The decoding method obtains a previously decoded image area based on the calculated motion vector. The image data of the previously decoded image area and the decoded prediction error are combined and the combined image data are outputted as the decoded current image area.

According to a further aspect, a method for encoding an interlaced video sequence is provided. The method receives an image area of a current field. The image area of the current field is predicted based on a motion compensated block of a previously encoded field. The motion compensation is performed based on a direct mode motion vector which is calculated based on a previous motion vector of an image area of another field of said interlaced video sequence wherein the image area in the other field is essentially located at the corresponding position. The motion vector for the current image area is calculated based on the obtained previous motion vector and on the temporal differences between the fields referenced by the new motion vector and the fields referenced by said obtained motion vector. The motion vector for the current field is calculated such that the motion vector always references fields having the same parity as the current field. The prediction error being determined based on the prediction of the current image area and the current image area. The resulting prediction error being encoded and outputted together with a direct mode indication.

Further preferred embodiments of the present invention are the subject-matter of dependent claims.

The above and other objects and features of the present invention will become apparent from the following description and preferred embodiments given in conjunction with the accompanying drawings, in which:

Fig. 1      illustrates a schematic block diagram of a motion compensated hybrid video encoder;

Fig. 2      illustrates a sub-division of a video image from a sequence of video images into slices and macro blocks;

Fig. 3      schematically illustrates a current block together with its neighboring blocks in a video image;

Fig. 4      schematically illustrates motion vector calculation in direct mode when the current block and its co-located block are in frame mode;

Fig. 5      schematically illustrates motion vector calculation in direct mode when the current block and its co-located block are in field mode;

Fig. 6      schematically illustrates motion vector calculation in direct mode when the co-located block in the reference points to another field of the same reference;

Fig. 7      schematically illustrates motion vector calculation in direct mode when the current block is in field mode and its co-located block is in frame mode;

Fig. 8      schematically illustrates motion vector calculation in direct mode when the current block is in frame mode while its co-located block is in field mode;

Fig. 9      schematically illustrates the calculation of the motion vector of the current block based on its temporal position with respect to the fields referenced by the motion vectors;

Fig. 10      is a flow-chart illustrating the steps for calculating a motion vector for a current block in direct mode;

Fig. 11      schematically illustrates an example of motion vector calculation in direct mode in accordance with the present invention; and

Fig. 12      schematically illustrates another example of a motion vector calculation in direct mode in accordance with the present invention.

The illustrative embodiments of the present invention will be described with reference to the figure drawings.

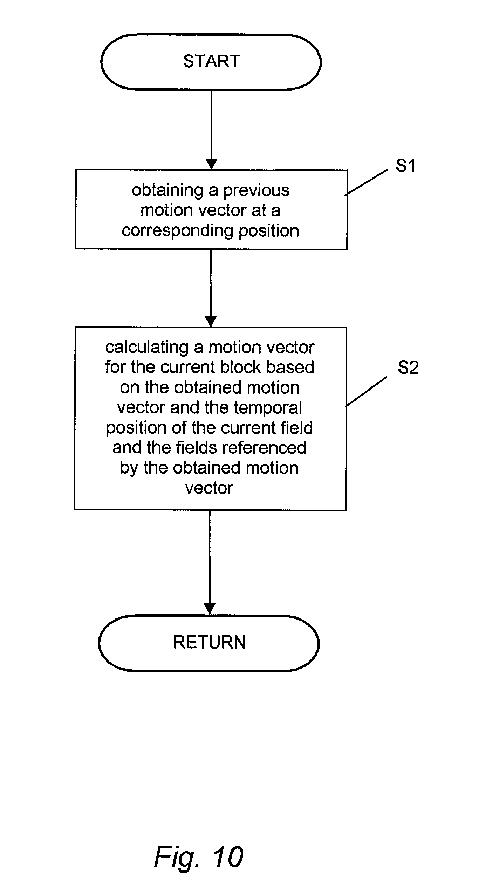

Referring now to the drawings and in particular to Fig. 10 showing a flow-chart for calculating a motion vector in accordance with the present invention.

In a first step for calculating a motion vector in direct mode, a previous motion vector is selected in step S1. The previous motion vector is selected from field already subjected to motion vector calculation. In accordance with modern encoding standards, multiple references may be used for that purpose. Preferably, the current field is a B-picture in accordance with MPEG encoding standards and the future P-picture is used. That block will be selected from the future reference which is located essentially at the same position as the current block. In case, all fields are sub-divided into blocks in the same manner, the block at the identical position in the future reference will be selected.

The future reference will also have two fields of different parity. In accordance with the present invention, the field with the same parity as the field of the current block will be selected and the existing motion vector will be employed for calculating a motion vector for the current block.

The motion vector for the current block is calculated in step S2 based on the obtained previous motion vector and, in addition, on the temporal distances of the fields referenced by the motion vectors. The calculation is similar to that described in accordance with Fig. 9. However, the present invention computes the new motion vector based on the actually referenced fields by the existing motion vector and the new motion vector.

The calculated motion vector for the current block may then be further used for encoding the image data of the current block, in particular for predicting the image data of the current block employing motion compensation based on the newly calculated motion vector. Employing a motion vector calculation in accordance with the present invention, the encoding efficiency, in particular the compression ratio, can be improved. Accordingly, a codec employing the present invention may transmit less data compared with conventional encoders and decoders for transmitting video data. Thus, a decoder can reconstruct a current block based on a smaller amount of transmitted data compared with up to date decoders.

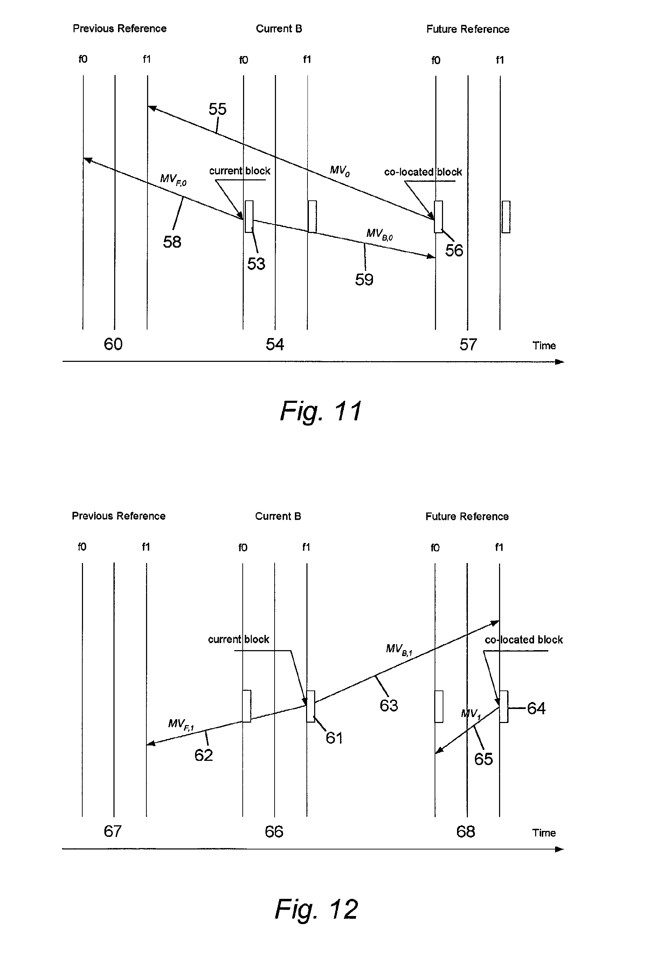

Examples for explaining the general concept of the present invention will now be given by referring to Fig. 11 and Fig. 12. Both figures show a configuration of images of an interlaced video sequence consisting of a current image, preferably a B-picture, a previous reference, and a future reference. As already mentioned above, the previous and future reference are preferably P-pictures. However, as newer coding standards may use multiple references, the previous and future reference need not to be adjacent images within the interlaced video sequence.

The present invention relates to a calculation of a motion vector in direct mode when both, the current block and the co-located block in the reference picture, are in field mode.

As shown in Fig. 11, the current block 53 in the current image 54 is included in a field having a parity f0. The future reference image 57 also comprises fields of parity f0 and parity f1. During motion vector calculation, the co-located block 56 in the fields of the same parity f0 is selected. The motion vector 55 of the co-located block is obtained and used for the calculation of motion vectors of the current block 53. Preferably, two motion vectors 58 and 59 are calculated for the current block 53. The obtained previous motion vector 55 references the field of party f0 in the future reference 57 and the field of parity f1 in the previous reference 60. In accordance with the present invention, both newly calculated motion vectors 58 and 59 reference the fields in the previous and future reference which have the same parity f0 of the current field.

In addition, the temporal positions of the involved fields with respect to each other are taken into account when calculating the new motion vectors 58 and 59. For that purpose, for each new motion vector 58, 59 the two temporal distances are determined, namely (a) the temporal distance between both fields referenced by the obtained previous motion vector 55 ($TD_D$ in Fig. 9) and the temporal distance between the current field and the field referenced by the newly calculated motion vector 58, 59 ($TD_B$ in Fig 9). In contrast to conventional scaling, the present invention selects references which do not correspond to those referred to by the obtained previous motion vector 55. In accordance with the newly selected references, the temporal distances are calculated based on the temporal positions of the references referred to by the previous motion vector 55 and those referred to by the newly calculated motion vector 58, 59.

This will become more apparent from the example shown in Fig. 12. The current block 61 is located in the field of parity f1. For calculating the new forward and backward motion vectors 62, 63, the motion vector 65 of the co-located block 64 in the future reference 68 having the same parity f1 is selected. Based on the selected motion vector 65, motion vector 62 and 63 are calculated.

As motion vector 65 references both fields of the future reference 68, namely the field having the parity f0 and f1, the present invention calculates new motion vectors referencing the fields having a corresponding parity, namely the field of parity f1 in the previous reference 67 and the field of the future reference 68 having the parity f1. The individual new motion vectors 62, 63 are calculated based on the temporal distances between both fields of the future reference 68 and the temporal distance between the current field and the field referenced by the respective new motion vector 62, 63.

In summary, the present invention aims to provide a motion vector calculation enabling an increased encoding efficiency. This is accomplished in a direct mode motion vector calculation by always referencing fields having the same parity as the current field. These fields provide a better prediction of the current block and result in a smaller prediction error to be encoded and transmitted.

## Claims

**1.** A method for calculating a motion vector for an image area (53) of a current field (54) of an interlaced video sequence, the method comprising the steps of:

obtaining (S1) a previously calculated motion vector (55) of an image area (56) in another field (57) of said interlaced video sequence, said previous motion vector (55) being calculated for an image area (56) essentially located at a corresponding position in the other field (57),

calculating (S2) a motion vector (58, 59) for said current image area (53) of the current field (54) based on the obtained motion vector (55) and on the temporal differences between the fields referenced by the new motion vector (58,59) and the fields referenced by said obtained motion vector (55),

**characterized in that**
said calculation step (S2) calculates the motion vector (58, 59) of the current image area (53) such that the calculated motion vector (58, 59) always references a field having the same parity (f0, f1) as the current field.

**2.** A method for calculating a motion vector according to claim 1, wherein said calculation step (S2) calculates a forward motion vector (58) and/or a backward motion vector (59).

**3.** A method for calculating a motion vector according to claim 2, wherein said calculation step (S2) calculates the forward motion vector (58) based on the field referenced by said obtained previous motion vector (55).

**4.** A method for calculating a motion vector according to claim 2 or 3, wherein said calculation step (S2) calculates the backward motion vector (59) based on the field from which the previous motion vector (55) has been obtained.

**5.** A method for calculating a motion vector according to claim 3 or 4, wherein the referenced field of the backward motion vector (59) is selected from the fields of the previous frame (60).

**6.** A method for calculating a motion vector according to any of claims 1 to 5, wherein each field of said interlaced video sequence being divided into a plurality of blocks, said motion vector (58, 59) being calculated for each block (53) of said plurality of blocks individually.

**7.** A method for calculating a motion vector according to any of claims 1 to 6, wherein the obtaining step (S1) obtains the previous motion vector (55) from the future reference (57) of the current field (54).

**8.** A method for calculating a motion vector according to any of claims 1 to 7, wherein the current field (54) being encoded as a B-picture.

**9.** A method for calculating a motion vector according to any of claims 1 to 8, wherein the new motion vector (58, 59) being calculated based on the ratio of the temporal distance ($TD_B$) between the current field (54) and the field to be referenced by the new motion vector (58, 59) and the temporal distance ($TD_D$) between the field from which the previous motion vector (55) is obtained and the field referenced by the previous motion vector (55).

**10.** A method for encoding an interlaced video sequence, comprising the steps of:

receiving the image data of an image area (53) of a current field,

predicting the image data of the image area (53) of the current field based on a motion compensated image area of a previously encoded field wherein motion compensation is performed using a direct mode motion vector (58, 59) which is calculated in accordance with the method of claim 1,

determining a prediction error as a difference between the image data predicted for the current image area (53) and the image data of the current image area (53),

encoding the predication error, and

outputting the encoded prediction error together with a direct mode indication.

**11.** A method for decoding an encoded interlaced video sequence, comprising the steps of:

receiving an encoded prediction error of a current block (53) together with a direct mode indication,

decoding the encoded prediction error,

obtaining an image area of a previously decoded field based on a direct mode motion vector (58, 59) which is calculated in accordance with the method of claim 1,

combining the image data of the previously decoded image area and the prediction error, and

outputting the decoded image data of the current image area (53).

**12.** A unit for calculating a motion vector for an image area of a current field of an interlaced video sequence, comprising:

a motion vector selector for selecting a motion vector (55) of an image area (56) in another field (57) of said interlaced video sequence, said selected motion vector (55) being calculated for an image area (56) essentially located at a corresponding position in the other field (57),

a motion vector calculator for calculating a motion vector (58, 59) for said current image area (53) of the current field (54) based on the obtained motion vector (55) and on the temporal differences between the fields referenced by the new motion vector (58,59) and the fields referenced by said obtained motion vector (55),

**characterized in that**
said motion vector calculator calculates the motion vector (58, 59) of the current image area (53) such that the calculated motion vector (58, 59) always references a field having the same parity (f0, f1) as the current field.

**13.** An encoder for encoding an interlaced video sequence, comprising:

an image data predictor (16, 19) for predicting the image data of a current block (53) of a current field based on a motion compensated block of a previously encoded field wherein motion compensation is performed using a direct mode motion vector (58, 59) which is calculated by a unit for calculating a motion vector in accordance with claim 12,

a subtractor (11) for determining a prediction error as a difference between the image data predicted by the image data predictor (16, 19) and the image data of the current block (53), and

an encoder (13, 14) for encoding the prediction error and outputting the encoded prediction error together with a direct mode indication.

**14.** A decoder for decoding an encoded interlaced video sequence, comprising:

a decoder (16) for decoding an encoded prediction error of a current image area (53),

a motion compensator (MC) for obtaining an image area of a previously decoded field based on a motion vector (58, 59) which is calculated by a unit for calculating a motion vector in accordance with claim 12,

an accumulator for accumulating the image data of the previously decoded image area and the decoded prediction error and for outputting the decoded image data of the current block (53).

**15.** A computer program product comprising a computer readable medium having computer readable program code embodied thereon, the program code being adapted to carry out all steps of claim 1.

1

10  11  13  14  15  17  18

+  DCT  Q  VLC  Buffer

12  −

Q-1

16

IDCT

+  +

MC  ◄  Buffer

19

ME

EP 1 408 694 A1

*Fig. 1*

21

MB

Slice

22

Picture

20

*Fig. 2*

| D | B | C |
|---|---|---|
| A | E |   |

*Fig. 3*

Previous Reference    Current B    Future Reference

f0    f1    f0    f1    f0    f1

28

$MV_F$    current block    MV    co-located block

29    26    30

24    23    25    Time

Fig. 4

Previous Reference    Current B    Future Reference

f0    f1    f0    f1    f0    f1

33

$MV_{F,0}$    current block    $MV_0$    co-located block

34    31    35    32

$MV_{B,0}$

24    23    Time

Fig. 5

Previous Reference       Current B       Future Reference

f0     f1       f0     f1       f0     f1

current block

$MV_{B,1}$

co-located block

$MV_{F,1}$

$MV_1$

38

36

37

Time

## Fig. 6

Previous Reference       Current B       Future Reference

f0     f1       f0     f1       f0     f1

$MV_{F,1}$

$MV$

41

43   $MV_{F,0}$   44

46

42

$MV_{B,1}$

39

40   $MV_{B,0}$

45

Time

## Fig. 7

Previous Reference

Current B

Future Reference

f0    f1

f0    f1

f0    f1

$MV^1_F$

block 1 at $(y_{current},x)$

$MV_0$

block $(y_{current}/2,x)$

47

$MV^2_F = MV^1_F$

$MV^1_B$

block 2 at $(y_{current}+1,x)$

$MV^2_B = MV^1_B$

48

Time

## Fig. 8

Previous Reference

Current B

Future Reference

f0    f1

f0    f1

f0    f1

...... 51

......

$MV_F$

current block

$MV$

co-located block

49

50

52

$MV_B$

$TD_D$

$TD_B$

Time

## Fig. 9

START

obtaining a previous
motion vector at a
corresponding position

S1

calculating a motion vector
for the current block based
on the obtained motion
vector and the temporal
position of the current field
and the fields referenced
by the obtained motion
vector

S2

RETURN

*Fig. 10*

Previous Reference                    Current B                    Future Reference

f0          f1                 f0          f1                 f0          f1

55

MV$_0$

current block          co-located block

MV$_{F,0}$

58          MV$_{B,0}$          56

53          59

60                    54                    57          Time

## Fig. 11

Previous Reference                    Current B                    Future Reference

f0          f1                 f0          f1                 f0          f1

current block          co-located block

MV$_{B,1}$

MV$_{F,1}$          63          64

62          61          MV$_1$          65

67                    66                    68          Time

## Fig. 12

European Patent

Office

## EUROPEAN SEARCH REPORT

Application Number

EP 02 02 2303

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 863 674 A (GEN INSTRUMENT CORP) 9 September 1998 (1998-09-09) * page 3, line 1 - line 17 * * page 9, line 22 - page 10, line 12; figures 4,5 * * page 11, line 34 - page 12, line 5; figure 7 * --- | 1-15 | H04N7/26 |
| A | "INFORMATION TECHNOLOGY - CODING OF AUDIO-VISUAL ABJECTS: VISUAL ISO/IEC 14496-2" INTERNATIONAL ORGANIZATION FOR STANDARDIZATION - ORGANISATION INTERNATIONALE DE NORMALISATION, XX, XX, no. N2202, March 1998 (1998-03), pages 1-329, XP000861689 * paragraph [7.5.9.5.1] * * paragraph [7.6.2.2]; figure 7.27 * * paragraph [7.5.9.5.2]; figure 7.23 * --- | 1-15 | |
| A | "H.26L TEST MODEL LONG TERM NUMBER 4 (TML-4) DRAFT 0" ITU-T TELECOMMUNICATION STANDARIZATION SECTOR OF ITU, GENEVA, CH, 16 May 2000 (2000-05-16), pages 1-29, XP001089817 * paragraph [06.2] * * paragraph [06.4] * ----- | 1-15 | TECHNICAL FIELDS SEARCHED (Int.Cl.7) H04N |

The present search report has been drawn up for all claims

| Place of search | Date of completion of the search | Examiner |
|---|---|---|
| THE HAGUE | 9 April 2003 | Georgiou, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 2303

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2003

| Patent document cited in search report | | Publication date | Patent family member(s) | | Publication date |
|---|---|---|---|---|---|
| EP 0863674 | A | 09-09-1998 | US | 5991447 A | 23-11-1999 |
| | | | AU | 728469 B2 | 11-01-2001 |
| | | | AU | 5739998 A | 10-09-1998 |
| | | | AU | 724796 B2 | 28-09-2000 |
| | | | AU | 5740098 A | 10-09-1998 |
| | | | AU | 728756 B2 | 18-01-2001 |
| | | | AU | 5740198 A | 10-09-1998 |
| | | | BR | 9800848 A | 23-11-1999 |
| | | | BR | 9800852 A | 23-11-1999 |
| | | | BR | 9800853 A | 03-11-1999 |
| | | | CA | 2230422 A1 | 07-09-1998 |
| | | | CA | 2230562 A1 | 07-09-1998 |
| | | | CA | 2230567 A1 | 07-09-1998 |
| | | | CN | 1198639 A | 11-11-1998 |
| | | | CN | 1226781 A | 25-08-1999 |
| | | | EP | 0863673 A2 | 09-09-1998 |
| | | | EP | 0863674 A2 | 09-09-1998 |
| | | | EP | 0863675 A2 | 09-09-1998 |
| | | | JP | 10304364 A | 13-11-1998 |
| | | | JP | 11075191 A | 16-03-1999 |
| | | | JP | 11004441 A | 06-01-1999 |
| | | | NO | 980948 A | 08-09-1998 |
| | | | NO | 980949 A | 08-09-1998 |
| | | | NO | 980950 A | 08-09-1998 |
| | | | US | 6026195 A | 15-02-2000 |
| | | | US | 6005980 A | 21-12-1999 |
| | | | US | 5974184 A | 26-10-1999 |

EPO FORM P0459

For more details about this annex : see Official Journal of the European Patent Office, No. 12/82